# EUROPEAN PATENT SPECIFICATION

(11) **EP 1 978 312 B1**
(45) Date of publication and mention of the grant of the patent: **25.09.2013**
(21) Application number: 08005335.8
(22) Date of filing: 20.03.2008
(51) Int. Cl.: F01P 11/02, F28D 20/00, F24H 1/18, F24H 9/12

(54) **Heat-insulating container and method for manufacturing same**
Wärmeisolierender Behälter und Herstellungsverfahren dafür
Récipient à isolation thermique et son procédé de fabrication

(30) Priority: 26.03.2007 JP 2007079456
(43) Date of publication of application: 08.10.2008
(73) Proprietor: NICHIAS CORPORATION, Tokyo 105-8555 (JP)
(72) Inventor: Tsukahara, Keiji, Tokyo 105-8555 (JP); Ohmura, Takahiro, Tokyo 105-8555 (JP); Yano, Kunihiko, Tokyo 105-8555 (JP)
(74) Representative: Winter, Brandl, Fürniss, Hübner, Röss, Kaiser, Polte - Partnerschaft

(56) References cited:
- AU-A- 7 303 474
- FR-A1- 2 803 652

## Description

### CROSS-REFERENCE TO RELATED APPLICATION

The priority application number JP2007-079456 refers to the application upon which this patent application is based.

### BACKGROUND OF THE INVENTION

### Field of the Invention

The present invention relates to a heat-insulating container for storing and maintaining the temperature of liquids, and more specifically relates to a heat-insulating container for storing and maintaining the temperature of cooling water used in vehicle engines.

### Description of the Related Art

Conventionally, heat-accumulating tanks comprising an inner cylinder which stores a liquid, and an outer cylinder which accommodates the inner cylinder therein, wherein a heat-insulating space in a vacuum state is formed between the outer cylinder and the inner cylinder, are known as heat-insulating containers. These containers are necessary in order to store and maintain the temperature of cooling water for use in vehicle engines (long-life coolant; hereafter abbreviated as "LLC"), and to accelerate the warm-up of the engine by circulating the temperature-controlled LLC when the engine is started (Japanese Laid-Open Patent Application No. 2006-104974).

Also known in the art is a hot water storage tank having an inside container that accommodates a liquid, and an outer case that envelops the inside container, wherein a vacuum heat-insulating material and a sheet-form heat insulating material are disposed in a space formed by the inside container and the outer case (Japanese Laid-Open Patent Application No. 2005-226965).

Moreover, a structure in which a vacuum heat-insulating material is disposed between an inner cylinder and an outer cylinder, and an electrical heater is disposed inside, is known as a heat-insulating container for storing and maintaining the temperature of a liquid (Japanese Laid-Open Utility Model Application No. 61-138954).

Document FR 2 803 652 A1 discloses an electric water heater comprising a tank and a water heating device located inside the tank, which is disposed inside an outer envelope, a thermal insulating material being placed between the tank and the envelope. The outer envelope has a generally square section and the thermal insulating material consists of vacuum insulating panels disposed along the flat walls of the outer envelope, an insulating foam material being placed in the spaces between the tank, the vacuum insulating panels and the envelope.

This document discloses the preamble of claim 1, and is the closest prior art of claim 7.

### SUMMARY OF THE INVENTION

In a heat-insulating container used to store cooling water for use in vehicle engines, a temperature-maintaining performance wherein the temperature of the LLC heated by the preheating of the engine is maintained at a high temperature until the engine is next started is required in order to improve the fuel consumption during engine starting. A demand also exists for a reduction in the manufacturing costs along with a reduction in the vehicle prime cost. Since this heat-insulating container is installed inside an engine compartment, there is a strong requirement for a configuration that can be accommodated inside the limited space inside an engine compartment, which varies according to the vehicle involved.

In the heat-insulating container indicated in Japanese Laid-Open Patent Application No. 2006-104974, a heat-insulating space in a vacuum state is formed between an inside container and an outer container made of a metal such as stainless steel. The inside container and the outer container are integrally formed by welding or spinning. However, in cases where the inside container and the outer container are manufacture from a metal such as stainless steel or the like, the manufacturing cost is increased, and the heat is emitted by heat bridging (the heat bridging effect) from the metal joint parts between the inside container and the outer container and it becomes impossible to obtain a sufficient temperature-maintaining effect. Furthermore, thin stainless steel sheets of 1 mm or less are respectively used for the inside container and outer container in order to suppress the heat loss caused by heat bridging, and the shape is limited to a cylindrical one in order to prevent deformation caused by the pressure difference between the heat-insulating space and the atmosphere and there are limits in forming a shape suitable for the limited space inside the engine compartment.

The heat-insulating container indicated in Japanese Laid-Open Patent Application No. 2005-226965 has a structure in which a vacuum heat-insulating material and sheet-form heat-insulating material are disposed in a space formed by an inside container that accommodates a liquid and an outer covering case that envelops the inside container. Since a gap is generated between the inside container, and the vacuum heat-insulating material and the sheet-form heat-insulating material, a high-performance heat-insulating effect cannot be obtained.

The heat-insulating container indicated in Japanese Laid-Open Utility Model Application No. 61-138954 has a structure in which a vacuum heat-insulating plate is disposed between an inner cylinder and an outer cylinder. The following problems arise: the heat-insulating effect is reduced by the heat loss from the gaps generated in the contact parts between the inner cylinder and outer cylinder and the vacuum heat-insulating plate, and from the gaps between the vacuum heat-insulating material on the side surface part of the inner cylinder and the vacuum heat-insulating material on the cover part and bottom part of the inner cylinder.

In view of the abovementioned problems, it is an object of the present invention to provide a heat-insulating container which can maintain a heat-insulating effect, which is suitable for a shape and design that can be accommodated in a limited space such as an engine compartment or the like, and which can further reduce manufacturing costs, and a method for manufacturing the same.

The object is solved by the features of the independent claims. The dependent claims are directed to preferred embodiments of the invention.

The present invention offers the following effects.
(1) The heat-insulating container of the present invention has a structure in which the inside container is made of a synthetic resin or a metal, a heat-insulating material is wrapped at a uniform thickness around the periphery of the inside container, the periphery of the heat-insulating material is further covered by a laminate film, and the space between the inside container and the laminate film is in a state of reduced pressure. As a result, the heat-insulating container of the present invention is superior in terms of heat insulating properties, and can be designed and manufactured in a shape that is suitable for a limited space such as the interior of an engine compartment or the like.
(2) A flange is disposed on an inlet and outlet opening part for the liquid, a heat-insulating material is added as a filling to the level of the flange surface, and the flange part and laminate film are joined; accordingly, the stress applied to the laminate film at the time of sealing under reduced pressure is alleviated, the joining properties are improved, and a vacuum heat-insulating layer with a high reliability can be formed.
(3) Furthermore, the inside container is made of a synthetic resin, a gas barrier layer comprising a metal plating layer is disposed on the surface, and a laminate film is used as the outer covering. As a result, the degree of vacuum of the vacuum heat-insulating layer can be maintained for a long period of time, and the manufacturing cost can be greatly reduced.
(4) A structure is used in which a portion of the fluid inlet and outlet opening part disposed in the inside container that is above the upper surface of the flange part is removable. As a result, the inside container covered by the heat-insulating material can easily be accommodated inside the bag-form outer covering.

### BRIEF DESCRIPTION OF THE DRAWINGS

FIG. 1 is a sectional view of the heat-insulating container of the present invention;
FIG. 2 is a sectional view of another heat-insulating container of the present invention;
FIG. 3 is a detailed sectional view of part A of the heat-insulating container of the present invention;
FIG. 4 is a detailed sectional view of part A of another heat-insulating container of the present invention;
FIG. 5 is a detailed sectional view of part A of another heat-insulating container of the present invention;
FIG. 6 is a descriptive view of the outer covering used in the present invention;
FIG. 7A is a descriptive view (part 1) of the method of manufacture of the heat-insulating container of the present invention;
FIG. 7B is a descriptive view (part 2) of the method of manufacture of the heat-insulating container of the present invention;
FIG. 8 is a detailed sectional view of a laminate film;
FIG. 9A shows another aspect (part 1) of the heat-insulating container of the present invention;
FIG. 9B shows another aspect (part 2) of the heat-insulating container of the present invention; and
FIG. 10 shows measurement results for the heat-maintaining performance.

### DESCRIPTION OF THE PREFERRED EMBODIMENTS

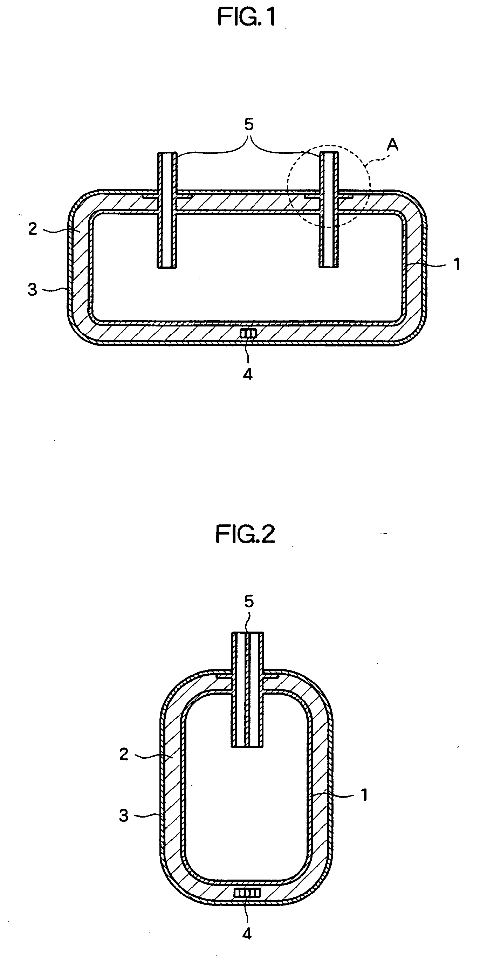

An embodiment of the heat-insulating container of the present invention will be described below. FIG. 1 shows a sectional view of a heat-insulating container in which a portion for inlet and a portion for outlet of a liquid inlet and outlet opening part 5 are installed at separate positions. Furthermore, FIG. 2 shows a sectional view of a heat-insulating container in which a portion for inlet and a portion for outlet of a liquid inlet and outlet opening part 5 are integrated by the installation of a partition part. In both examples, a heat-insulating container is shown in which the periphery of the inside container 1 is covered by a heat-insulating material 2 comprising inorganic fibers, the periphery of the heat-insulating material 2 is covered by an outer covering 3 comprising a sheet-form laminate film, a gas adsorbing material 4 is sealed between the inside container 1 and the outer covering 3, and the space between the inside container 1 and the outer covering 3 is in a state of reduced pressure. By "state of reduced pressure" is meant a state in which the gas pressure is reduced to a pressure lower than atmospheric pressure in order to improve the heat insulating properties. For example, such a gas pressure refers to a pressure of 0.01 to 100 Pa, and is preferably a pressure of 0.1 to 10 Pa.

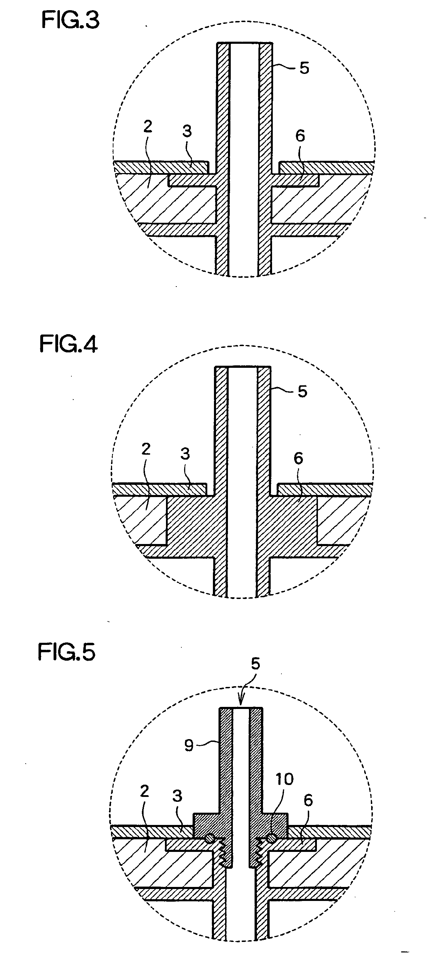

Next, the joint structure of the outer covering 3 at the liquid inlet and outlet opening part 5 of the inside container 1 in such heat-insulating containers will be described. Examples of part A shown in FIG. 1 are described in FIGS. 3 through 5. FIGS. 3 through 5 show containers in which rim-form flanges 6 are formed on the liquid inlet and outlet opening part 5. Furthermore, the heat-insulating material 2 covers the inside container 1 so that the upper surface of the heat-insulating material 2 and the upper surfaces of the flanges 6 constitute substantially the same plane. The outer covering 3 is layered on the substantially same plane. The outer covering 3 and the upper surfaces of the flanges 6 are joined. As a result, the bonding work of the joint parts of the outer covering 3 and the flanges 6 is facilitated. No force that would break or strip the outer covering 3 is applied in the joint parts of the outer covering 3 and flanges 6 in cases where a space between the inside container 1 and outer covering 3 are sealed in a vacuum state or during handling of the heat-insulating container, and a vacuum heating layer having a high reliability can be realized. The liquid inlet and outlet opening part 5 shown in FIG. 5 has a structure in which the parts of the fluid inlet and outlet part 5 that are above the upper surfaces of the flanges 6 are removable. In this case, O-rings 10 are interposed between the ports 9 for liquid inlet and outlet openings and the flanges 6 in order to maintain the air-tightness.

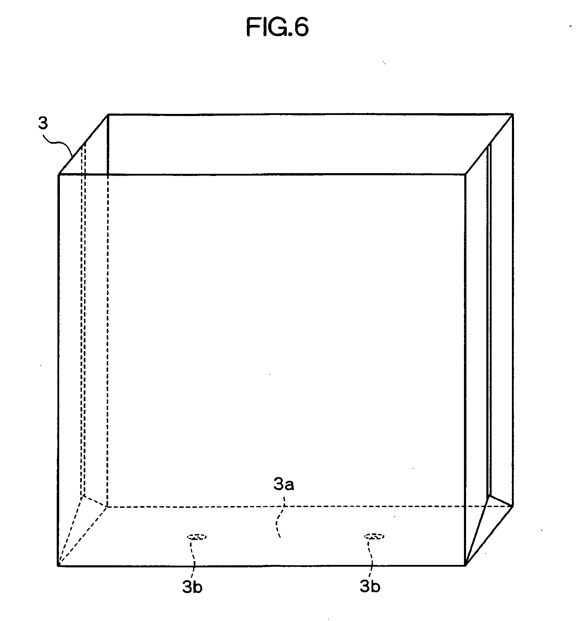

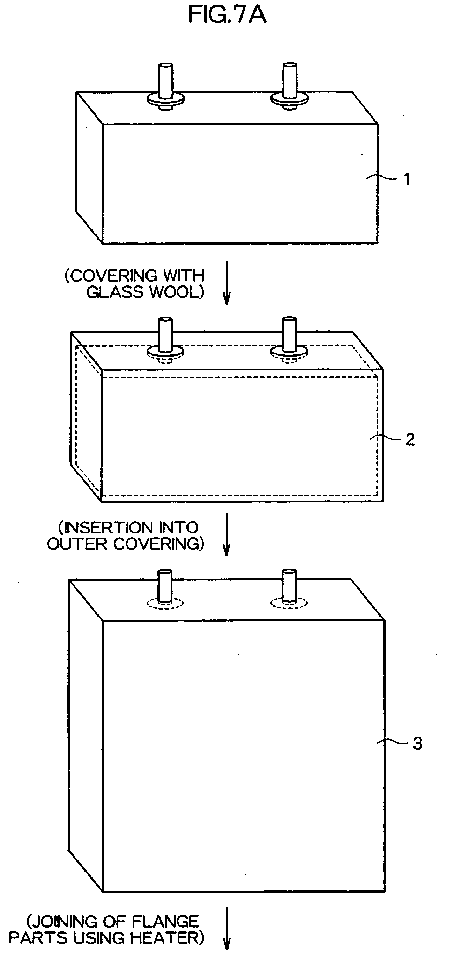

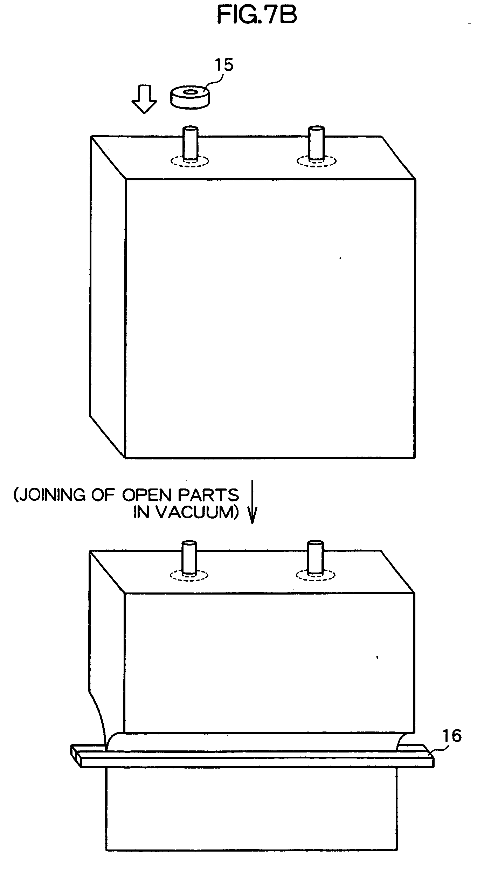

The manufacturing procedure used in order to realize the structure of the heat-insulating container of the present invention is shown in FIGS. 6, 7A and 7B.

FIG. 6 shows the outer covering 3 used in this manufacturing process. Holes 3b, 3b which engage with the liquid inlet and outlet opening part 5 of the inside container 1 are formed in the bottom surface 3a of the bag-form outer covering 3.

The heat-insulating container is manufactured according to the procedure shown in FIGS. 7A and 7B, using such an outer covering 3.

Specifically, the periphery of the inside container 1 is covered by a blanket-form heat-insulating material 2 comprising a glass wool to a thickness which is such that the upper surface of the heat-insulating material 2 is equal to the positions of the upper surfaces of the flanges 6 formed in the fluid inlet and outlet opening part 5. Next, the inside container 1 and the heat-insulating material 2 are covered by an outer covering 3 comprising a bag-form laminate film, and the positions of holes 3b, 3b formed in the outer covering 3 and the fluid inlet and outlet opening part 5 are engaged. Next, the outer covering 3 and the flanges 6 disposed on the fluid inlet and outlet opening part 5 are joined (thermally welded) using a ring-form heater 15. Next, a gas adsorbent 4 is sealed between the inside container 1 and the outer covering 3. Then, the inside container 1 covered by the outer covering 3 is conveyed into a vacuum chamber not shown, and the open part of the outer covering 3 is joined (thermally welded) by a welding sealing heater 16 in a vacuum atmosphere at 10 Pa or less.

The inside container 1 is made of either a synthetic resin or metal; from the standpoint of temperature-maintaining characteristics and vacuum maintaining characteristics, a metal is desirable. A stainless steel having low thermal conductivity is especially desirable. From the standpoint of manufacturing cost and forming a shape suitable for the limited spaces, a synthetic resin is desirable.

Examples of synthetic resins that can be used include resins selected from a set consisting of acrylonitrile-butadiene-styrene copolymers (ABS), acrylonitrile-styrene copolymers (AS), EEA resins (EEA), epoxy resins (EP), ethylene-vinyl acetate polymers (EVA), ethylene-vinyl alcohol copolymer (EVOH), liquid crystal polymers (LCP), MBS resins (MBS), melamine formaldehydes (MMF), polyamides (PA), polybutylene terephthalamides (PBT), polycarbonate resins (PC), polyethylenes (PE), polyethylene terephthalates (PET), tetrafluoroethylene-perfluorovinylalkylvinyl ether polymers (PFA), polyimides (PI), polymethyl methacrylate (PMMA), polyacetal resins (POM), polypropylenes (PP), polyphthalamides (PPA), polyvinylphenylene sulfide resins (PPS), polystyrenes (PS), polytetrafluoroethylene-polytetrafluoroethylenes (PTFE), polyurethanes (PU), polyvinyl alcohols (PVA), polyvinyl chlorides (PVC), polyvinylidene chlorides (PVDC), and the like. By using such resins, it is possible to mold inside containers of complicated shapes by injection molding and extrusion molding, and to reduce manufacturing costs.

Furthermore, in cases where the inside container 1 is made of a synthetic resin, a gas barrier layer comprising a metal plating layer is formed on the surface of the inside container 1 in order to prevent permeation of gases, so that the degree of vacuum in the vacuum heat-insulating space formed between the inside container 1 and the outer covering 3 can be maintained for a long period of time. Here, the gas barrier layer is a layer that suppresses permeation of gases. Specifically, for example, the oxygen permeation rate of the laminate film on which the gas barrier layer is laminated, as measured by the method (JIS-K7126-1) based on Japan Industrial Standards, is 1.1 x 10⁻¹¹m³/m²-s-MPa or less, and is preferably 1.1 x 10⁻¹²m³/m²-s-MPa or less. The thickness of such a gas barrier layer is, for example, 5 to 30 µm, and is preferably 6 to 15 µm. Furthermore, universally known plating can be used for the plating. For example, plating of laminating electrolytic copper on electroless nickel can be appropriately used.

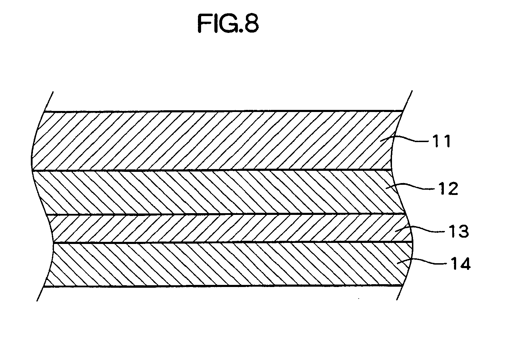

The cross-sectional structure of the laminate film constituting the outer covering 3 is shown in FIG. 8. In the present invention, a gas barrier layer is formed in the outer covering 3. There are no particular restrictions on the material, structure or configuration of the outer covering 3 as long as the abovementioned gas permeability requirement is satisfied. A sheet-form outer covering 3 is suitably used. A laminate film with a multi-layer structure comprising a "protective layer 11/protective layer 12 (substrate layer 12)/gas barrier layer 13/adhesive layer 14" shown in FIG. 8 can be one example of such an outer covering 3. The thickness of such a laminate film is, for example, 45 to 120 µm, and is preferably 60 to 100 µm.

There are no particular restrictions on the material forming the adhesive layer 14, as long as joining to the flanges 6 of the inside container 1 and joining of the adhesive layers 14 to each other is possible. In the present invention, a material having a low gas permeability is preferable. Specifically, an ethylene-vinyl alcohol copolymer, nylon, polyvinyl alcohol, polyvinylidene chloride, or polyester is desirable, and it is especially desirable to use an ethylene-vinyl alcohol copolymer. More specifically, if the material of the flanges 6 is a polyethylene, the material of the adhesive layer 14 may be a polyethylene, if the material of the flanges 6 is a polypropylene, the material of the adhesive layer 14 is a polypropylene or ethylene-vinyl alcohol, and if the material of the flanges 6 is a metal, it is desirable that the adhesive layer 14 be formed from an ethylene-vinyl alcohol. The thickness of the adhesive layer 13 is, for example, 10 to 70 µm, and is preferably 30 to 50 µm.

There are no particular restrictions on the material forming the gas barrier layer 13, as long as permeation of gases can be limited. For example, a metal foil such as a stainless steel foil or aluminum foil may be used. An aluminum foil which has a low gas permeability and a relatively low thermal conductivity is especially desirable for use. The thickness of the gas barrier layer 13 is, for example, 5 to 30 µm, and is preferably 6 to 15 µm.

The protective layers 11, 12 are layers that protect the gas barrier layer 13. For example, these layers 11, 12 prevent the formation of pinhole cracks or the like in the aluminum foil that forms the gas barrier layer 13, and ensure the gas permeation preventive effect. Synthetic resins such as polyesters or nylons can be ideally used as the material that forms such protective layers 11, 12. The thickness of the protective layers 11, 12 is, for example, 10 to 50 µm, and is preferably 20 to 40 µm. If necessary, furthermore, the protective layers 11, 12 can be formed as a plurality of layers as shown in FIG. 8. By using a construction which has a plurality of layers (e.g., the protective layer 11 and the protective layer 12 shown in FIG. 8), it is possible to add functions that take advantage of the respective characteristics of the resins used in the formation of the respective layers to the protective layers 11, 12.

With regard to the heat-insulating material 2 that envelops the inside container 1, materials that are universally known as heat-insulating materials can be used. For example, an organic porous body such as a polystyrene foam, a molded body containing ceramic powders such as calcium silicate, silica or alumina, or inorganic fiber heat-insulating materials comprising one or more types of inorganic fibers such as glass wool, rock wool, or ceramic fibers may be used. In particular, glass wool with a mean fiber diameter of 5 µm or less from which the adsorbed water content has been removed in a high-temperature atmosphere are especially desirable for use. Such heat-insulating materials may be used singly or in combinations of two or more materials. Furthermore, a gas adsorbent 4 may be sealed inside the vacuum heat-insulating layer in order to prevent a drop in the degree of vacuum of the vacuum heat-insulating layer caused by gases generated from the heat-insulating material 2, gases invading from the outside air by permeating the resin of the joint parts between the outer covering 3 and the inside container 1, or the like. A gas adsorbent having a three-layer structure comprising a calcium oxide layer that adsorbs moisture, a barium/lithium alloy layer that adsorbs oxygen and nitrogen, and a cobalt oxide layer that adsorbs hydrogen is used as the gas adsorbent 4. The barium/lithium alloy layer also has the function of adsorbing moisture in addition to oxygen and hydrogen. Accordingly, by using a structure in which the barium/lithium alloy layer is an intermediate layer between the calcium oxide layer and the cobalt oxide layer, it is possible to utilize the adsorption characteristics of the respective layers with good efficiency.

The amount of glass wool that is wrapped around the surface of the inside container 1 is determined from the heat-insulating performance that is required in the heat-insulating container. For example, in a heat-insulating container equipped with vacuum heat-insulating layer having a thickness of 10 mm and wrapped with glass wool at the rate of 0.25 g/cm², a vacuum heat-insulating layer having a thickness of 5 mm and wrapped with glass wool at the rate of 0.13 g/cm², or a vacuum heat-insulating layer having a thickness of 15 mm and wrapped with glass wool at the rate of 0.38 g/cm², when water at 95°C was poured and the water temperature was measured after 12 hours had passed, the result obtained was approximately 70°C in the case of a thickness of 5 mm, approximately 78°C in the case of a thickness of 10 mm, and approximately 82°C in the case of a thickness of 15 mm.

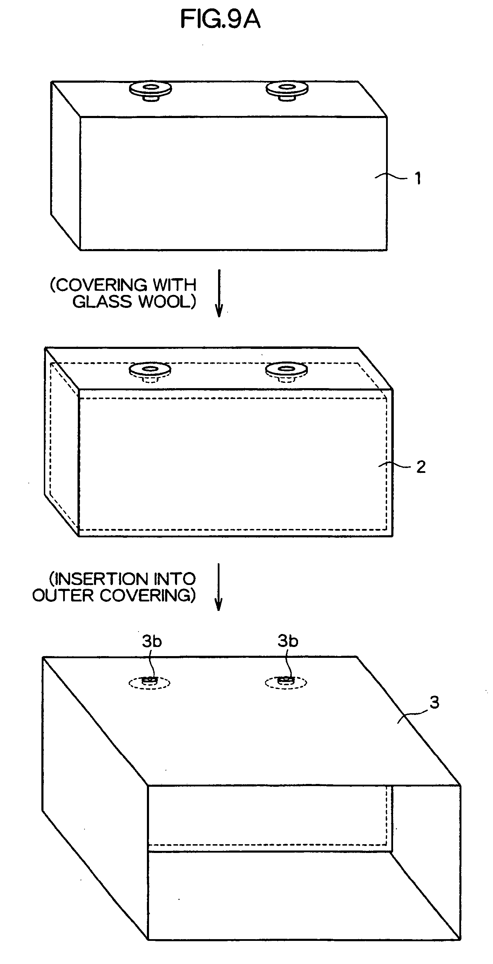

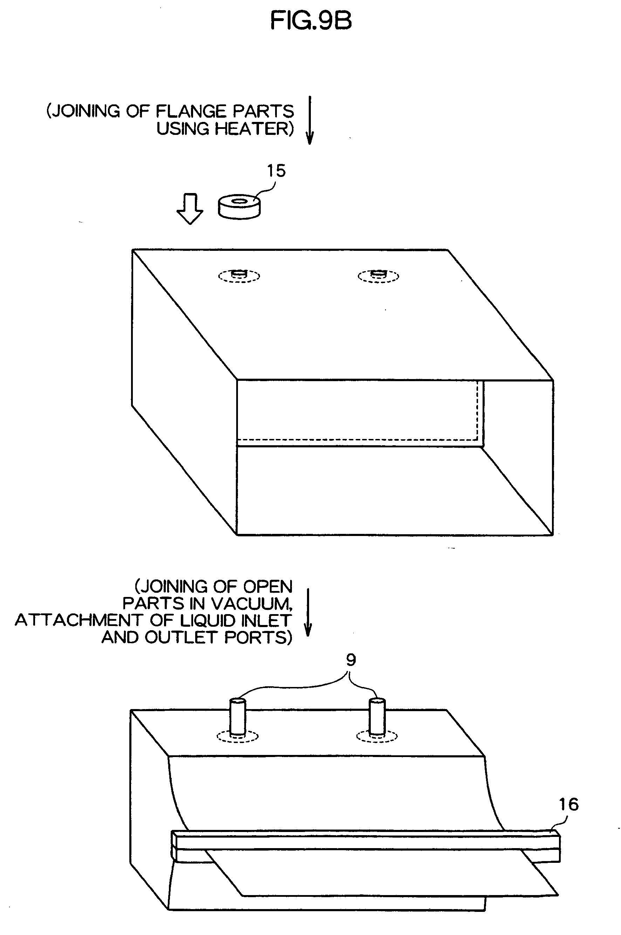

FIGS. 9A and 9B are descriptive views showing other aspects of the heat-insulating container of the present invention.

In the present embodiments, removable ports 9 for liquid inlet and outlet openings are used as the upper parts of the liquid inlet and outlet opening part 5 shown in FIG. 5. First, in a state in which the ports 9 for liquid inlet and outlet openings have been removed from the inside container 1, the periphery of the inside container 1 is covered by a blanket-form heat-insulating material 2 comprising a glass wool to a thickness which is such that the upper surface of the heat-insulating material 2 reaches the positions of the upper surfaces of the flanges 6 disposed on the fluid inlet and outlet opening part 5. Next, the inside container 1 and the heat-insulating material 2 are covered by an outer covering 3 comprising a bag-form laminate film.

Next, the positions of the holes 3b formed in the outer covering 3 and the fluid inlet and outlet opening part 5 are engaged, and the outer covering 3 and flanges 6 disposed on the fluid inlet and outlet opening part 5 are thermally welded using a ring-form heater 15. Next, a gas adsorbent 4 is sealed between the inside container 1 and the outer covering 3. Then, the inside container 1 covered by the outer covering 3 is conveyed into a vacuum chamber (not shown), and the open part of the outer covering 3 is joined (thermally welded) by a welding and sealing heater 16 in a vacuum atmosphere at 10 Pa or less. Subsequently, the ports 9 for liquid inlet and outlet openings are attached with O-rings 10 interposed between the liquid inlet and outlet opening part 5 of the inside container 1 that has been brought out from the vacuum chamber. This enables the inside container 1 covered by the heat-insulating material 2 to be easily be inserted into the outer covering 3 regardless of the shape of the bag-form outer covering 3.

### [EXAMPLES]

The detailed manufacturing method of the heat-insulating container of the present invention will be described below, but is not provided by way of limitation.

A rectangular polyethylene container having an internal volume of approximate 2.6 L and a thickness of 8 mm was used as the inside container 1 of the present invention. Liquid inlet and outlet opening part 5 having an external diameter of 18.5 mm, an internal diameter of 13 mm, and a height of 30 mm were formed in one surface of the inside container 1. Flanges 6 having an external diameter of 12 mm and a thickness of 3 mm were formed on the inlet and outlet opening part 5. ABS resin layers were formed on the surfaces of the inside container 1 except at the surfaces of the flanges 6. Next, an electroless nickel plating layer was formed, and an electrolytic copper plating layer was further formed, so that a gas barrier layer was formed.

A film having a multi-layer structure composed of a polyethylene terephthalate layer (12 µm) constituting a protective layer 11, a nylon layer (15 µm) constituting a protective layer 12, an aluminum foil (6 µm) constituting a gas barrier layer 13, and a polyethylene layer (50 µm) constituting an adhesive layer 14 was used as the laminate film constituting the outer covering 3. Furthermore, a film formed by forming this laminate film into a bag shape was used as the outer covering 3.

A glass wool (white wool manufactured by Asahi Fiberglass) was used as the fiber heat-insulating material 2, and a getter material (COMB03GETTER manufactured by SAES Getters) was used as the gas adsorbent 4.

The periphery of the polyethylene container constituting the inside container 1 was covered by the glass wool to a thickness which was such that the upper surface of the glass wool reached the positions of the upper surfaces of the flanges 6 disposed on the inlet and outlet opening part 5 of the inside container 1. The density of the glass wool in this case was approximately 0.25 g/cm² with respect to the surface area of the inside container 1. Next, the inside container 1 and the glass wool were allowed to stand for 24 hours in an oven at 120°C, and the moisture contained in the glass wool was evaporated. The inside container 1 was conveyed into an argon atmosphere after drying, and was accommodated into a bag-form outer covering 3 formed from the laminate film. In this case, holes formed in the outer covering 3 and liquid inlet and outlet opening part 5 disposed on the inside container 1 were aligned, and the upper surface of the flanges 6 disposed on the inlet and outlet opening part 5 and the peripheries of the holes in the outer covering 3 were heated and joined (thermally welded) by a ring-form heater 15. The temperature of the heater 15 in this case was approximately 160°C, and a state in which the laminate film was pressed against the upper surfaces of the flanges 6 was maintained for approximately 6 seconds. Accordingly, the laminate film was joined (thermally welded) to the upper surfaces of the flanges 6.

Subsequently, a single getter material constituting the gas adsorbent 4 was loaded into the space between the inside container 1 and the laminate film. Afterward, the inside container 1 and the laminate film were conveyed into the vacuum chamber, and the pressure inside the vacuum chamber was reduced to 10 Pa. Then, the open part of the outer covering 3 was joined (thermally welded) and sealed by a heater installed inside the vacuum chamber, and a heat-insulating container having a vacuum heat-insulating layer with a thickness of 10 mm was manufactured.

Hot water at a temperature of approximate 100°C was poured into the heat-insulating container, and was allowed to stand for approximately 10 minutes. Subsequently, this hot water was discarded, and hot water at a temperature of approximately 100°C was again poured into the heat-insulating container. Then, a thermocouple was inserted from the liquid inlet and outlet opening part 5, and the liquid inlet and outlet opening part 5 was closed with rubber plugs. The water temperature was continuously measured for 12 hours (720 minutes) starting at the point in time at which the water temperature inside the heat-insulating container reached 95°C.

### [COMPARATIVE EXAMPLE]

As a comparative example, a heat-insulating container having a metal double tube construction was used, comprising a structure in which a stainless steel sheet having a thickness of approximately 0.5 mm was used for both the inside container and the outer container, and a vacuum heat-insulating layer was disposed between the inside container and the outer container. The liquid pouring opening of the heat-insulating container of the comparative example has a structure in which a cover is used as a heat-insulating member, and the heat release from the liquid pouring opening was suppressed.

Hot water at a temperature of approximately 100°C was poured into the heat-insulating container of this comparative example in approximately the same volume as in the example, and was allowed to stand for 10 minutes. Subsequently, the hot water was discarded, and hot water at a temperature of approximate 100°C was again poured into the heat-insulating container. Then, a thermocouple was inserted into the heat-insulating container, and the pouring opening was closed. The water temperature was continuously measured for 12 hours (720 minutes) starting at the point in time at which the water temperature inside the heat-insulating container reached 95°C.

### [MEASUREMENT RESULTS]

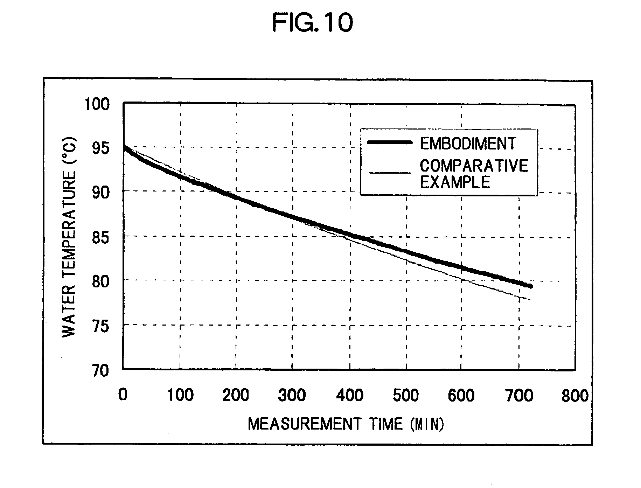

The measurement results for the embodiment and comparative example are shown in FIG. 10.

The heat-insulating container of the present invention kept 95°C hot water at a temperature of approximately 80°C after 12 hours had elapsed. In contrast, in the case of the comparative example, hot water at a temperature of 95°C exhibited a temperature of approximately 78°C after 12 hours had elapsed. The heat-insulating container with a.metal double tube structure used as the comparative example was of a commercially marketed thermos bottle type, wherein stainless steel sheets with a thickness of approximately 0.5 mm were used for both the inside container and the outer container and a vacuum heat-insulating layer was disposed between the inside container and the outer container. Furthermore, the fluid pouring openings of the heat-insulating container in the comparative example were of a construction whereby heat insulation was achieved using the cover member, and the heat release from the fluid pouring openings was suppressed.

### INDUSTRIAL APPLICABILITY

The heat-insulating container of the present invention can be utilized as a heat-insulating container for storing and maintaining the temperature of liquids, and is especially suitable for use as a heat-insulating container for storing and maintaining the temperature of LLC used in vehicle engines. In addition, the heat-insulating container of the present invention can also be utilized for heat-maintaining containers such as electric pots and the like, and can also be utilized for cold-maintaining containers for liquefied gas and the like.

## Claims

1. A heat-insulating container for storing and maintaining the temperature of a liquid, comprising:
an inside container (1) having an inlet and outlet opening part (5) for the liquid; and
a sheet-form outer covering (3) which accommodates the inside container (1); wherein
a heat-insulating material (2) is sealed between the outer covering (3) and the inside container (1), and a heat-insulating space in which the pressure is reduced is formed; **characterized in that**
an upper surface of a flange part (6) disposed on the inlet and outlet opening part (5) and an upper surface of the heat-insulating material (2) constitute substantially the same plane; and
the upper surface of the flange part (6) and the outer covering (3) are joined.

2. The heat-insulating container according to claim 1, **characterized in that**:
the inside container (1) is made of metal;
the outer covering (3) is a laminate film having an adhesive layer (14); and
the adhesive layer (14) is an ethylene-vinyl alcohol copolymer, nylon, polyvinyl alcohol, polyvinylidene chloride, or polyester.

3. The heat-insulating container according to claim 1, **characterized in that**:
the inside container (1) is made of a resin;
the outer covering (3) is a laminate film having an adhesive layer (14);
a gas barrier layer (13) is disposed on the surface of the inside container (1); and
the adhesive layer (14) is an ethylene-vinyl alcohol copolymer, nylon, polyvinyl alcohol, polyvinylidene chloride, or polyester.

4. The heat-insulating container according to claim 3, **characterized in that**:
the inside container (1) is made of a resin comprising a polyethylene or polypropylene.

5. The heat-insulating container according to one of claims 1 to 4, **characterized in that**:
the heat-insulating material (2) comprises an inorganic fiber that is either glass wool, rock wool, or ceramic fiber, or a mixture of these fibers;
an adsorbent (4) having a three-layer structure comprising calcium oxide, a barium/lithium alloy, and cobalt oxide is sealed inside the heat-insulating space; and
an intermediate layer of the adsorbent (4) is the barium/lithium alloy.

6. The heat-insulating container according to one of claims 1 to 5, **characterized in that**:
a portion of the inlet and outlet opening part (5) disposed on the inside container (1) that is above the upper surface of the flange part (6) is removable.

7. A method for manufacturing a heat-insulating container for storing and maintaining the temperature of a liquid, wherein:
a heat-insulating material (2) for covering the area surrounding an inside container (1) which has an inlet and outlet opening part (5) for the liquid is formed at a thickness which is such that an upper surface of the heat-insulating material (2) and an upper surface of a flange part (6) disposed on the inlet and outlet opening part (5) constitute substantially the same plane;
the heat-insulating material (2) is covered by an outer covering (3) in which a hole through which the inlet and outlet opening part (5) passes is formed;
the upper surface of the flange part (6) and an area surrounding the hole formed in the outer covering (3) are joined; and
a space between the inside container (1) and the outer covering (3) is tightly sealed in a state of reduced pressure.

8. The method for manufacturing a heat-insulating container according to claim 7, **characterized in that**:
the outer covering (3) is a bag-form laminate film; and
an open part of the bag-form laminate film is joined inside a vacuum atmosphere after the upper surfaces of the flange parts (6) and the outer covering (3) have been joined.

9. The method for manufacturing a heat-insulating container according to claim 7 or 8, **characterized in that**:
a portion of the inlet and outlet opening part (5) disposed on the inside container (1) that is above the upper surface of the flange part (6) is removable.

## Patentansprüche

1. Wärmeisolierbehälter zum Speichern und Halten der Temperatur einer Flüssigkeit, der aufweist:
einen Innenbehälter (1), der einen Einlass- und Auslassöffnungsteil (5) für die Flüssigkeit aufweist; und
eine blattförmige Außenhülle (3), in der der Innenbehälter (1) untergebracht ist; wobei
ein Wärmeisoliermaterial (2) zwischen der Außenhülle (3) und dem Innenbehälter (1) versiegelt ist und ein Wärmeisolierraum, in dem der Druck verringert ist, ausgebildet ist;
**dadurch gekennzeichnet, dass**
eine obere Fläche eines Flanschteils (6), der an dem Einlass- und Auslassöffnungsteil (5) angeordnet ist, und eine obere Fläche des Wärmeisoliermaterials (2) im Wesentlichen dieselbe Ebene bilden; und
die obere Fläche des Flanschteils (6) und die Außenhülle (3) miteinander verbunden sind.

2. Wärmeisolierbehälter nach Anspruch 1, **dadurch gekennzeichnet, dass**
der Innenbehälter (1) aus Metall besteht;
die Außenhülle (3) ein Laminatfilm ist, der eine Klebeschicht (14) aufweist; und
die Klebeschicht (14) ein Ethylen-Vinylalkohol-Copolymerisat, Nylon, Polyvinylalkohol, Polyvinylidenchlorid oder Polyester ist.

3. Wärmeisolierbehälter nach Anspruch 1, **dadurch gekennzeichnet, dass**
der Innenbehälter (1) aus Harz besteht;
die Außenhülle (3) ein Laminatfilm ist, der eine Klebeschicht (14) aufweist;
eine Gassperrschicht (13) auf der Fläche des Innenbehälters (1) angeordnet ist; und
die Klebeschicht (14) ein Ethylen-Vinylalkohol-Copolymerisat, Nylon, Polyvinylalkohol, Polyvinylidenchlorid oder Polyester ist.

4. Wärmeisolierbehälter nach Anspruch 3, **dadurch gekennzeichnet, dass**
der Innenbehälter (1) aus einem Harz besteht, das Polyethylen oder Polypropylen aufweist.

5. Wärmeisolierbehälter nach einem der Ansprüche 1 bis 4, **dadurch gekennzeichnet, dass**
das Wärmeisoliermaterial (2) eine anorganische Faser aufweist, die entweder Glaswolle, Steinwolle oder eine Keramikfaser oder eine Mischung aus diesen Fasern ist;
ein Adsorptionsmittel (4), das eine Dreischichtstruktur aufweist, Kalziumoxid, die eine Barium/Lithiumlegierung und Kobaltoxid aufweist, innerhalb des Wärmeisolierraums versiegelt ist; und
eine Zwischenschicht des Adsorptionsmittels (4) die Barium/Lithiumlegierung ist.

6. Wärmeisolierbehälter nach einem der Ansprüche 1 bis 5, **dadurch gekennzeichnet, dass**
ein Abschnitt des Einlass- und Auslassöffnungsteils (5), der an dem Innenbehälter (1) angeordnet ist, oberhalb der oberen Fläche des Flanschteils (6) entfernbar ist.

7. Verfahren zum Herstellen eines Wärmeisolierbehälters zum Speichern und Halten der Temperatur einer Flüssigkeit, wobei
ein Wärmeisoliermaterial (2) zum Bedecken des Bereiches, der einen Innenbehälter (1) umgibt, der einen Einlass- und Auslassöffnungsteil (5) für die Flüssigkeit aufweist, mit einer Dicke derart ausgebildet ist, dass eine obere Fläche des Wärmeisoliermaterials (2) und eine obere Fläche eines Flanschteils (6), der an dem Einlass- und Auslassöffnungsteil (5) angeordnet ist, im Wesentlichen dieselbe Ebene bilden;
das Wärmeisoliermaterial (2) von einer Außenhülle (3) bedeckt ist, in der ein Loch, durch das der Einlass- und Auslassöffnungsteil (5) verläuft, ausgebildet ist;
die obere Fläche des Flanschteils (6) und ein Bereich, der das Loch umgibt, das in der Außenhülle (3) ausgebildet ist, miteinander verbunden sind; und
ein Raum zwischen dem Innenbehälter (1) und der Außenhülle (3) in einem Zustand eines verringerten Druckes dicht versiegelt ist.

8. Verfahren zum Herstellen eines Wärmeisolierbehälters nach Anspruch 7, **dadurch gekennzeichnet, dass**
die Außenhülle (3) ein taschenförmiger Laminatfilm ist; und
ein Öffnungsteil des taschenförmigen Laminatfilms innerhalb einer Vakuumatmosphäre verbunden wird, nachdem die oberen Flächen der Flanschteile (6) und der Außenhülle (3) verbunden wurden.

9. Verfahren zum Herstellen eines Wärmeisolierbehälters nach Anspruch 7 oder 8, **dadurch gekennzeichnet, dass**
ein Abschnitt des Einlass- und Auslassöffnungsteils (5), der an dem Innenbehälter (1) angeordnet ist, oberhalb der oberen Fläche des Flanschteils (6) entfernbar ist.

## Revendications

1. Contenant calorifuge destiné à stocker et maintenir la température d'un liquide, comprenant :
un contenant intérieur (1) ayant une partie d'ouverture d'admission et de refoulement (5) pour le liquide ; et
un revêtement externe en forme de feuille (3) qui loge le contenant intérieur (1) ; dans lequel
un matériau calorifuge (2) est scellé entre le revêtement externe (3) et le contenant intérieur (1), et un espace calorifuge dans lequel la pression est réduite est formé ; **caractérisé en ce que**
une surface supérieure d'une partie de bride (6) disposée sur la partie d'ouverture d'admission et de refoulement (5) et une surface supérieure du matériau calorifuge (2) constituent sensiblement le même plan ; et
la surface supérieure de la partie de bride (6) et le revêtement externe (3) sont reliés.

2. Contenant calorifuge selon la revendication 1, **caractérisé en ce que** :
le contenant intérieur (1) est constitué de métal ;
le revêtement externe (3) est un film laminé ayant une couche adhésive (14) ; et
la couche adhésive (14) est un copolymère d'éthylène-alcool vinylique, du nylon, du poly(alcool vinylique), du poly(chlorure de vinylidène), ou du poly (ester) .

3. Contenant calorifuge selon la revendication 1, **caractérisé en ce que** :
le contenant intérieur (1) est constitué d'une résine ;
le revêtement externe (3) est un film laminé ayant une couche adhésive (14) ;
une couche barrière aux gaz (13) est disposée sur la surface du contenant intérieur (1) ; et
la couche adhésive (14) est un copolymère d'éthylène alcool vinylique, du nylon, du poly(alcool vinylique), du poly(chlorure de vinylidène), ou du poly(ester).

4. Contenant calorifuge selon la revendication 3, **caractérisé en ce que** :
le contenant intérieur (1) est constitué d'une résine comprenant un poly(éthylène) ou un poly(propylène).

5. Contenant calorifuge selon l'une quelconque des revendications 1 à 4, **caractérisé en ce que** :
le matériau calorifuge (2) comprend une fibre inorganique qui est soit de la laine de verre, soit de la laine de roche, soit une fibre céramique, soit un mélange de ces fibres ;
un adsorbant (4) ayant une structure à trois couches comprenant de l'oxyde de calcium, un alliage baryum/lithium et un oxyde de cobalt est scellé à l'intérieur de l'espace calorifuge ; et
une couche intermédiaire de l'adsorbant (4) est l'alliage de baryum/lithium.

6. Contenant calorifuge selon l'une quelconque des revendications 1 à 5, **caractérisé en ce que** :
une portion de la partie d'ouverture d'admission et de refoulement (5) disposée sur le contenant intérieur (1) qui est au-dessus de la surface supérieure de la partie de bride (6) est amovible.

7. Procédé de fabrication d'un contenant calorifuge destiné à stocker et maintenir la température d'un liquide, dans lequel :
un matériau calorifuge (2) destiné à couvrir la zone entourant un contenant intérieur (1) qui a une partie d'ouverture d'admission et de refoulement (5) pour le liquide est formé à une épaisseur qui est telle qu'une surface supérieure du matériau calorifuge (2) et une surface supérieure d'une partie de bride (6) disposée sur la partie d'ouverture d'admission et de refoulement (5) constituent sensiblement le même plan ;
le matériau calorifuge (2) est couvert par un revêtement externe (3) dans lequel un trou à travers lequel la partie d'ouverture d'admission et de refoulement passe est formé ;
la surface supérieure de la partie de bride (6) et une zone entourant le trou formé dans le revêtement externe (3) sont reliées ; et
un espace entre le contenant intérieur (1) et le revêtement externe (3) est scellé fermement dans un état de pression réduite.

8. Procédé de fabrication d'un contenant calorifuge selon la revendication 7, **caractérisé en ce que** :
le revêtement externe (3) est un film laminé en forme de sac ; et
une partie ouverte du film laminé en forme de sac est reliée à l'intérieur d'une atmosphère sous vide après que les surfaces supérieures des parties de bride (6) et le revêtement externe (3) ont été reliés.

9. Procédé de fabrication d'un contenant calorifuge selon la revendication 7 ou 8, **caractérisé en ce que** :
une portion de la partie d'ouverture d'admission et de refoulement (5) disposée sur le contenant intérieur (1) qui est au-dessus de la surface supérieure de la partie de bride (6) est amovible.
